# EUROPEAN PATENT SPECIFICATION

(11) **EP 1 604 506 B1**
(45) Date of publication and mention of the grant of the patent: **07.02.2007**
(21) Application number: 03778596.1
(22) Date of filing: 05.12.2003
(51) Int. Cl.: H04L 29/08

(54) **CLIENT WEB SERVICE ACCESS**
KUNDENZUGANG ZUM INTERNETDIENST
ACCES AUX SERVICES WEB CLIENT

(30) Priority: 15.03.2003 GB 0305959
(43) Date of publication of application: 14.12.2005
(73) Proprietor: International Business Machines Corporation, Armonk, N.Y. 10504 (US)
(72) Inventor: FREMANTLE, Paul, Zachary, Emsworth Hampshire PO10 7PA (GB); HUTCHISON, Elizabeth, Anne, Romsey Hampshire SO51 6JX (GB)
(74) Representative: Gascoyne, Belinda Jane
(86) International application number: PCT/GB2003/005320
(87) International publication number: WO 2004/084522

(56) References cited:
- US-A- 6 029 175
- US-B1- 6 173 322
- WINSBOROUGH W H ET AL: "Automated trust negotiation" DARPA INFORMATION SURVIVABILITY CONFERENCE AND EXPOSITION, 2000. DISCEX '00. PROCEEDINGS HILTON HEAD, SC, USA 25-27 JAN. 2000, LAS ALAMITOS, CA, USA,IEEE COMPUT. SOC, US, 25 January 2000 (2000-01-25), pages 88-102, XP010371169 ISBN: 0-7695-0490-6

## Description

### Field of the Invention

The present invention relates to client access to web services and more particularly to the handling of requests from a web client to access a web service.

### Background to the Invention

Over recent years web services have become commonplace, for example, for a business to provide a web-service which enables a web client to purchase goods from the business over the internet. Following on from this success use of the internet has increased and the requirements of web clients and web businesses have become ever more complex. From this has resulted the arrival of middleware offerings which enable clients to access, and businesses to implement, web services in new and better ways.

For example a service bus provides a flexible managed infrastructure for web services. In general, clients and web service providers operating in the services bus use a smart client "on-ramp" to attach to the service bus and this enables context and other environmental information to be added to the client/web service interactions so that, for example, security, transaction and other processing can be handled correctly according to the requirements of the web service and its clients. Further, it allows service selection and discovery to take place in a managed way, such that when a client wishes to access a web service it can use a web service which is found based on the functionality required by the client. For example a client may request a web service that sells IBM computer equipment offering delivery in the UK and accepts payment by American Express. Such a smart client "on-ramp" and service bus architecture is disclosed in US application No: 10/322053 "Apparatus and method for selecting a web service in response to a request from a client device", Inventors: Flurry and Holdsworth.

However some clients or web services in the service bus environment may be unaware of the bus infrastructure, for example the clients could be NET, C, or Python/Perl/JavaScript SOAP clients which are hard-coded to use a particular URL and format to access a web servi ce. Further such clients are not written using an application programming interface (API) specified for accessing the service bus infrastructure, for example Web Services Invocation Framework (WSIF) or the Java JSR1 09 programming model (available from the Java Community Process web site) (Java is a trade mark of Sun Microsystems Inc.). Typically, for a service bus to process requests from such clients the client request is forwarded to a hub intermediary or gateway for processing by the service bus. For example a gateway is published as the provider of the web service and can, on receipt of a client request, route the request to an appropriate web service provider which is discovered and selected in a managed way that would also be used for a service bus aware client. However, this requires the client to be updateable to change the URL specified in its request to the URL of the hub intermediary and in some scenarios the client may not be updateable in this manner. Furthermore, the intermediary may not be able to perform actions that only the client could perform - such as adding client specific information to the request.

### Summary of the invention

Accordingly, according to a first aspect, the present invention provides a client data processing method for a client data processing host to transform a request from a web client, the method comprising: intercepting the request; changing a first web service implementation specified in the request to a second web service implementation; and forwarding the request to the second web service implementation thereby enabling the second web service implementation to process the request, wherein the second web service implementation is selected based on policy data associated with the web client.

According to a second aspect the present invention provides a client data processing apparatus for transforming a request from a web client, the apparatus comprising: means for intercepting the request; means for changing a first web service implementation specified in the request to a second web service implementation; and means for forwarding the request to the second web service implementation thereby enabling the second web service implementation to process the request, wherein the second web service implementation is selected based on policy data associated with the web client.

According to a third aspect the present invention provides a computer program product comprising instructions which, when executed on a data processing host, cause the data processing host to carry out a method according to the first aspect.

The present invention thus enables a client request for a particular web service to be intercepted in the client host and transformed to a request for a different web service which has been selected in a managed way. For example the policy data may specify specific quality of service requirements for the web client and as a result a web service is accessed which more appropriately matches the web client quality of service requirements.

The request from the web client can be specified in an application layer protocol, for example, Simple Object Access Protocol over Hypertext Transfer Protocol (SOAP/HTTP); Internet Inter-Orb Protocol (IIOP); or SOAP over Java Message Service (JMS). Optionally the request may be further modified to a different application layer protocol to that in which the web client request was specified. For example, it can be changed from a SOAP/HTTP request to an IIOP request.

There are several alternatives as to how the request is intercepted. Optionally if the protocol stack of the client data processing host includes SOCKS support, the SOCKS support can be configured with a SOCKS proxy local to the client and the step of intercepting the request can result from the SOCKS proxy being called when the protocol stack is processing the request. Alternatively, if the protocol stack of the client data processing host includes HTTP support it may support configuration with an HTTP proxy, in which case intercepting the request can result from a local HTTP proxy being called . Alternatively the protocol stack is modified to intercept the request during processing and call a routine which is used to enable the step of changing the request.

Preferably in order to choose a second web service implementation one or more alternative web service implementations to handle the request are discovered and then the second web service implementation is chosen from those discovered based on the policy data, for example, published using the Web Services Policy framework (WS-Policy).

Optionally the one or more alternative web service implementations are discovered by obtaining Web Services Definition Language (WSDL) document for the first web service implementation and using information from this WSDL document to obtain a WSDL document for each of the one or more alternative web service implementations to handle the request.

Optionally a security policy is applied to the request. For example at least apart of the request may be encrypted and/or a client key may be added to the request and/or a transport mechanism for sending the request is chosen based on its security properties, as indicated using Web Services Security Protocol (WS-Security) or other information. The client key could be, for example, an identifier such as a client identifier or a user identifier. Further the client key could, for example, include a password.

Optionally client specific information could also be added to the request. For example a client key, a machine identifier of the client data processing host, and/or an IP address of the client data processing host. Such information could, for example, be used by the web service implementation for audit or security purposes.

The policy data may, for example, specify one or more of: response time requirements; security level requirements; transaction requirements; cost requirements; availability requirements; application layer protocol requirements; additional information requirements; and web service implementation requirements.

### Brief Description of the Drawings

The invention will now be described, by way of example only, with reference to a preferred embodiment thereof, as illustrated in the accompanying drawings, in which:
Figure 1 is a block diagram of data processing environment in which the preferred embodiment of the present invention is advantageously applied;
Figure 2 is a schematic diagram showing an example of a web client sending a request from a client process to a web service according to the prior art;
Figure 3 is a schematic diagram of a web client sending a request from a client process to a web service according to the preferred embodiment of the present invention;
Figure 4 is a schematic diagram of the on-ramp of figure 3, processing a request which originated from a web client;
Figure 5 is a flow chart of the main processing steps of a client data processing host of figure 3; and
Figure 6 is a flow chart of the main processing steps of the on ramp of figure 3.

Note that in the figures like numbers are used for like parts.

### Description of the Preferred Embodiment

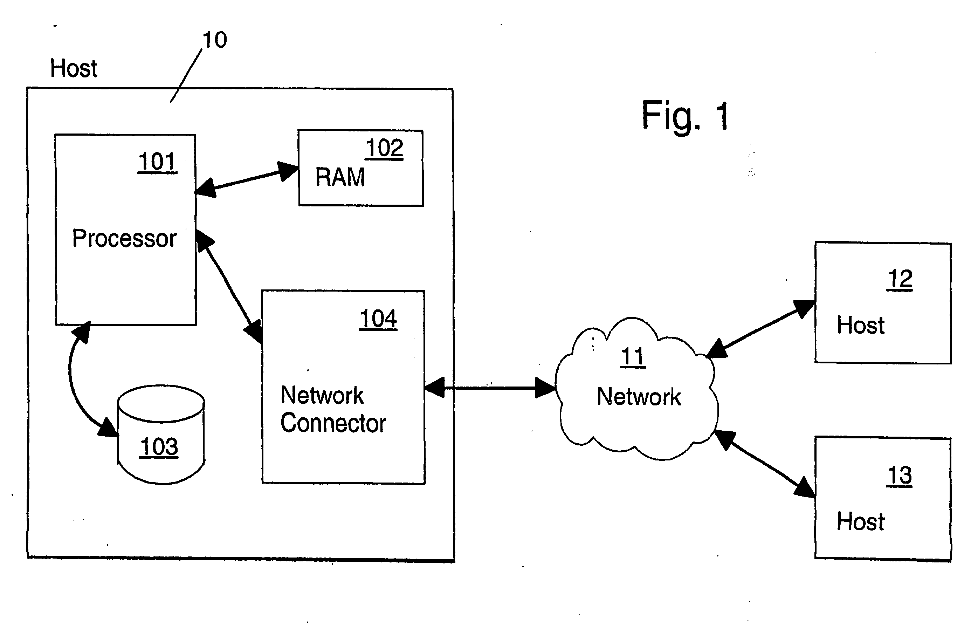

Figure 1 is a schematic diagram of a data processing environment in which the preferred embodiment of the present invention can be advantageously applied. In figure 1, a client/server data processing host 10 is connected to other client/server data processing hosts 12 and 13 via a network 11, which could be, for example, the Internet. For example, according to the present invention, a web client running on host 10 can make a request to a web service available in host 12, but software running in the client transforms the request into a request to a web service available in host 13, the web service in host 13 being selected based on a policy data associated with the web client. Client/server 10 has a processor 101 for executing programs that control the operation of the client/server 10, a RAM volatile memory element 102, a non-volatile memory 103, and a network connector 104 for use in interfacing with the network 11 for communication with the other client/servers 12 and 13.

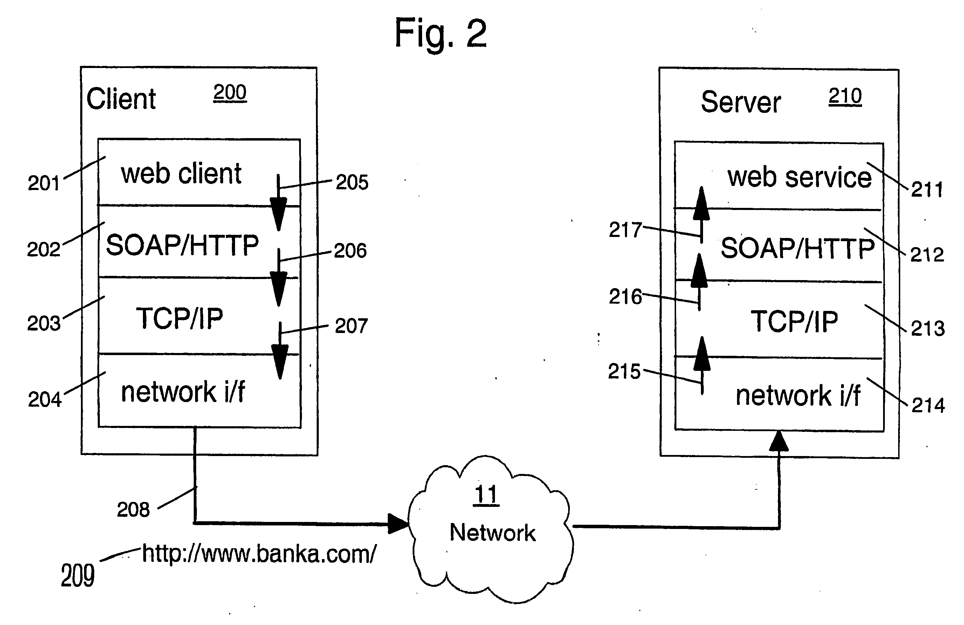

Figure 2 is a schematic diagram showing an example of a web client 201 sending a request 208 to a web service implementation 211 according to the prior art. The web client and web service run in data processing hosts 200 and 210 respectively, each using a TCP/IP protocol stack.

In Figure 2 the web client makes a request for a bank service operation that is directed to a bank service at URL http://www.banka.com/(209). The web client 201 passes (205) the request to the application layer 202 of the protocol stack. The application layer provides high level protocols through which a web client/service can access, for example, the TCP/IP protocol stack and in this example provides Simple Object Access Protocol (SOAP) over Hypertext Transfer Protocol (HTTP). Alternatively, for example, the application layer could provide Internet Inter-Orb Protocol (IIOP). The application layer 202 modifies the request and then passes (206) it to the transport and network layer 203. The transport and network layer provides data transfer over a network and in this example this layer provides support for Transmission Control Protocol (TCP) over Internet Protocol (IP). Alternatively, for example, the transport and network layer could provide User Datagram Protocol (UDP). The network and transport layer 203 then modifies the request and passes (207) it to the network interface layer 204 which interfaces with the client hardware and transmits the request 208 over the network 11.

When the request arrives at the host 210 of the web service implementation it is received by the network interface layer 214 which passes (215) the request to the transport and network layer 213 which provides support for TCP/IP. The transport and network layer undoes the changes made to the message in the client network and transport layer and then passes (216) it to the application layer 212, which provides support for SOAP/HTTP. The application layer then undoes the changes made to the request in the client application layer and passes (217) it to the target web service implementation 211. Thus the client request has been received for processing. Note that the web service protocol stack must provide support for the same protocols used in the client stack (i.e: SOAP/HTTP and TCP/IP) in order to successfully process the web client request.

However, a problem of the prior art of Figure 2, is that web client is hard coded with the URL (http://www.banka.com) of a web service implementation to which its request will be directed. As a result the client cannot take advantage of a service bus which can, for example, select a web service implementation to handle the request based in policy data associated with the web client.

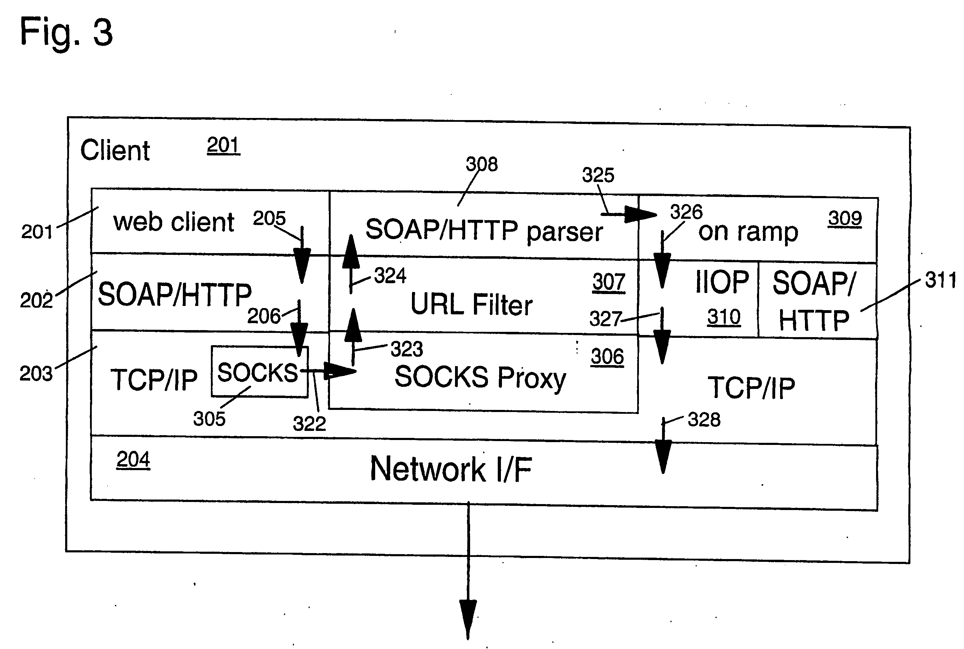

Figure 3 is a schematic diagram of the client data processing host 200 of Figure 2 which has been modified according to the preferred embodiment of the present invention. In this embodiment the TCP/IP layer further includes SOCKS support 305. In normal use SOCKS is configured to re-route a web client request to a SOCKS proxy (or server), the SOCKS proxy then performs some level of security checking before allowing the web client request to proceed to the destination specified in the request. However, according to the preferred embodiment of the present invention SOCKS support 305 is configured to re-route a web client request to an adapted SOCKS proxy 306 which is local to the client. As a result when the web client request is passed to the TCP/IP transport and network layer 203, SOCKS support 305 is called and this redirects (322) the request to the local adapted SOCKS proxy 306 which then passes (323) the request to a URL filter 307. The URL filter checks the URL specified as the target of the web client request with a configuration file which contains details which are used to decide if the URL specified as the target of the web client request is suitable for modification. For example the configuration file may contain a list of specific URL's for which an exact match is required or a list of URL's containing wildcards for which a similarity match is required. If the URL is not suitable for modification the web client request is returned (not shown) to the TCP/IP transport and network layer 203 for normal processing. However, if the URL is suitable for modification the request is passed (324) to a SOAP/HTTP parser 308 which can extract information, such as any data which accompanied the URL in the web client request. Having extracted the required information, the request is passed (325) to the on ramp 309 which then modifies the request to be suitable for passing to a service bus which provides access to a variety of web service implementations using a variety of protocols. According to the preferred embodiment of figure 3 the service bus available to the client provides access to web service implementations using one of two protocol combinations, IIOP 310 and SOAP/HTTP 311 and the on ramp modifies the web client request to be for an alternative web service implementation which is available via the service bus and using an IIOP request. As a result the on ramp 309 passes (326) the request for the alternative web service implementation to the IIOP application layer 310 which then passes (327) it on to the TCP/IP transport and network layer 203 for passing (328) to the network by the network interface layer 204 for sending over the network.

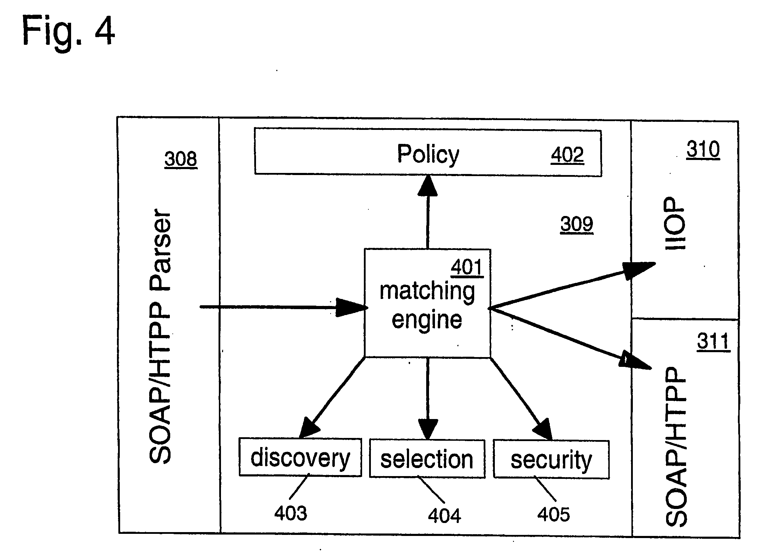

Figure 4 is a more detailed schematic diagram of the on-ramp 309 of figure 3 and the components which interface with it, namely the SOAP/HTTP parser 308 and SOAP/HTTP 310 and IIOP 311 application layers of the service bus. The web client request is passed from the SOAP/HTTP parser to a matching engine 401 of the on ramp 309. The matching engine looks up policies specified for the web client in a policy file 402. The policy file may, for example, contain details for the client of response time requirements, security level requirements, transaction requirements, cost requirements, availability requirements, application layer protocol requirements, additional information requirements, and/or web service implementation requirements. The matching engine, then uses the policy information and request information as extracted from by the SOAP/HTTP parser from the web client request to modify the request using discovery 403, selection 404, and security 405 mechanisms. The discovery mechanism 403 is used to discover alternative web service implementations available on the service bus and that are able to process the web client request, for example based on the URL specified in the request. The selection mechanism 404 is then used to s elect a specific web service implementation from those discovered. The one chosen will closely match the requirements specified in the policy file. The selection mechanism may further select a suitable protocol from those available from the service bus and which can be used to access the web service implementation. A security mechanism 405 may also be used for selection purposes, for example to select a suitable protocol which matches the security requirements of the client or web service. For example the client or web service implementation may require communication through a more secure protocol such as WS-Security over SOAP, secure HTTP (HTTPS), or secure IIOP (IIOPS). Further the security mechanism may, for example, encrypt the message using SOAP encryption and/or add information to the request such as a client key based on the security requirements of the web client or web service implementation. In the preferred embodiment as a result of using these mechanisms the matching engine 401 selects an appropriate web service to handle the web client request and provides that to a suitable transport protocol, for example SOAP/HTTP or IIOP, 311 and 310 respectively.

Note that, for example, the policy file may contain one or more of: a response time requirement which requires uses of a faster transport protocol or a web service which gives a guaranteed response time; a security level requirement which requires encryption of the request or use of a secure protocol such as HTTPS; a cost requirement which specifies a maximum price range for goods provided by the web service or use of a communication protocol which provides a low cost connection; an availability requirement which requires use of a web service which provides 24x7 availability or use of a protocol with guaranteed request delivery such as transactional JMS; an application layer protocol requirement which specifies one or more application layer protocols which either must be used or must not be used for sending the request; an additional information requirement which requires an IP address and/or machine identifier of the client data processing host to be added to the request; and web service implementation requirement which requires for example, a web service implementation provided IBM approved dealer or a dealer base in the USA which accepts payment by American Express.

Thus a preferred embodiment of the present invention has been described in which a web client request is intercepted and transformed. Transformation of the request includes changing the web service to which the request is sent, and optionally changing such things as the application layer protocol used to send the request, the security protocol used for the request, or adding information to the request. However, there are many alternative embodiments to that described.

For example, in the described embodiment, with reference to figure 3, the web client uses a SOAP/HTTP application layer 202. However, in an alternative embodiment this could be, for example, IIOP, IIOPS, HTTP, HTTPS, SOAP over JMS, Remote Method Invocation (RMI) over IIOP, XML over Java Message Service (JMS), SOAP over Simple Mail Transfer Protocol (SMTP), or Enterprise JavaBeans (EJB) (JavaBeans is a registered trademark of Sun Microsystems Inc.). If, for example, the application, layer was IIOP the SOAP/HTTP parser 308 would be replaced by an IIOP parser.

Further, for example, in the described embodiment, with reference to figure 3, the web client request is intercepted in the transport and network layer 203 by SOCKS support 305. However, in an alternative embodiment this could be achieved by a different means. For example, the HTTP layer can be configured to call a local HTTP proxy, thus replacing the SOCKS server 306 with a HTTP proxy and changing interception of the web client request to be in the SOAP/HTTP application layer (202).

Further, for example, in the described embodiment, with reference to figure 3, the on ramp 309 is able to use a service bus which provides application layer protocols of either IIOP 310 or SOAP/HTTP 311 for the sending of requests. In another embodiment one or more of these application layer protocols may be omitted and/or replaced and/or added to. For example other additional/alternative layers provided by the service bus could be IIOP, IIOPS, HTTP, HTTPS, SOAP over JMS, RMI over IIOP, XML over JMS, SOAP over SMTP, or EJB. Further the transport and network layer protocols available to these application layer protocols can be changed and/or added to, for example UDP/IP can be available in addition to TCP/IP.

Further with reference to figure 4, for example, when the discovery mechanism 403 discovers one or more alternative web service implementations to which the client request can be targeted it may do this based on Web Service Definition Language (WSDL) documents. This is possible if the client used a WSDL document to obtain a definition of the target service implementation to which it made a request. In this case, after intercepting the request the discovery mechanism can first obtain the target service WSDL document and then, based on information in this WSDL, obtain WSDL documents for suitable alternative web service implementations, for example from a Universal Description, Discovery and Integration (UDDI) registry. Note that a WSDL document contains details of the target service such as Port Type, Bindings, Ports, Messages, Types etc. The Port Type defines the operation and operation parameters provided by the target service, the Bindings specify the transport mechanisms, and the Port specifies the end point addresses for channels providing access to the target service using the transport mechanisms. For example, alternatively a DARPA Agent Markup Language (DAML) Services document could be used instead of a WSDL document

Further, for example, in the preferred embodiment, with reference to figure 4, the matching engine uses discovery, selection and security mechanisms to transform the request. In an alternative embodiment one or more of these mechanisms may be omitted and/or replaced and/or added to and/or encapsulated into the matching engine. For example an additional or alternative mechanism could provide transactionality by surrounding one or more requests from the web client in a unit of work. Further the client policy data may be, for example, encapsulated in the mechanisms or a random policy may be applied. Further the web client request may be passed directly to the matching engine without first being parsed and alternatively the matching engine could make calls to the parser as required.

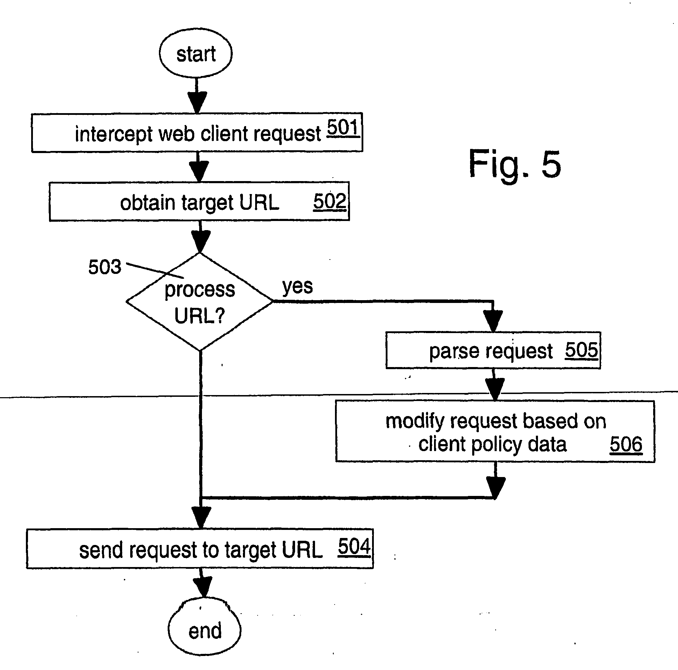

Figure 5 is a flow diagram of the main steps in the preferred embodiment of the present invention. At step 501 the web client request is intercepted. At step 502 the URL specified as the target of the web,client request is obtained and at step 50 3 a check is made to see if the URL is listed in a configuration file as a URL that is suitable for transformation by the on ramp (309 of figure 3). If the URL is not suitable for transformation the web client request is sent to the target URL at step 504. However, if the URL is suitable for transformation at step 505 the web client request is parsed to obtain additional information such as any parameters sent with the request, for example, details of a particular aspect of the web service to which the request is targeted, or details of a WSDL document which describes the web service to which the request is targeted. Then, at step 506 the web client request is modified based on client policy data. For example, the request is redirected to a web service which provides the same service as that of the original request but which is approved for use by the client based company policy data. Once the request has been modified it is then sent, at step 504, to the web service to which it has been redirected.

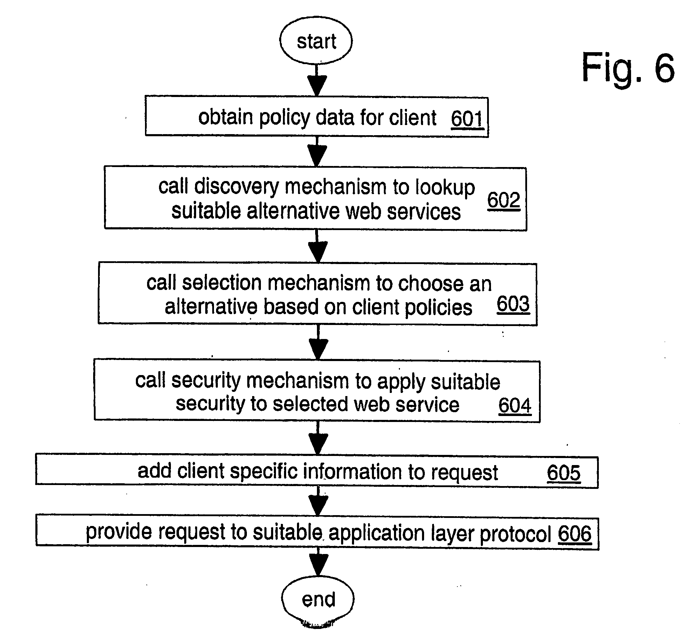

Figure 6 is a more detailed flow diagram of the processing carried out at step 506 of figure 5. At step 601 policy data for the client is obtained from a configuration file and at step 602 a discovery mechanism is used to find suitable alternative web service implementations to handle the web client request. Alternatives for example can be found based on the URL and any additional data specified in the web client request. Further policy data may be used by the discovery mechanism. At step 603 a selection mechanism is used to select a web service implementation, from the discovered list of suitable alternatives, to handle the request. For example, a web service could be selected based on client policy data which specifies that the web service must be UK based and provide for payment by American Express. The selection mechanism may further select an application layer protocol for sending the request based on those available from the service bus and through which the selected web service implementation can be contacted. Having selected a web service, at step 604 a security mechanism is used to apply an appropriate security policy to the request, for example the selected web service may require all communications to be encrypted and/or a secure applicat ion layer protocol to be used. At step 605, optionally client specific information is added to the request, for example an identifier which can be used to identify the client data processing host such as an IP address or machine or an identifier which can be used to identify the web client or web client user. Finally at step 606 the transformed request is provided to a suitable application layer protocol, for example IIOP or SOAP/HTTP. For example the request protocol may be chosen to match that of the selected web service or chosen from several supported by the selected web service based on a client policy which specifies for example a required response time.

Note that whilst the preferred embodiment of the present invention has been described in general terms a skilled person would realise that the invention could be embodied in a data processing method, a data processing apparatus or a computer program product comprising instructions for carrying out the data processing method.

Thus present invention provides a method, apparatus and computer program product in which a web client request for a web service is intercepted and the target of the request updated according to policy data associated with the client. Further the application layer protocol in which the web client request is specified may be changed and/or information added to the request. As a result a web client which makes a request for which the target web service is hard-coded may be adapted to take advantage of managed access to web services resulting in access to web services which, for example, provide quality of service characteristics which more appropriately match the requirements of the web client.

## Claims

1. A client data processing method for transforming a request from a web client, the method comprising the steps:
intercepting the request;
changing a first web service implementation specified in the request to a second web service implementation; and
forwarding the request to the second web service implementation thereby enabling the second web service implementation to process the request,
wherein the second web service implementation is selected based on policy data associated with the web client.

2. The method of claim 1 wherein the request is specified in a first application layer protocol and the method comprises the further step of:
modifying the request to be specified in a second application layer protocol.

3. The method of either claim 1 or claim 2 wherein the client data processing host comprises a SOCKS proxy and the step of intercepting the request comprises calling the SOCKS proxy and including with the call details of the request.

4. The method of either claim 1 or claim 2 wherein the client data processing host comprises a HTTP proxy and the step of intercepting the request comprises calling the HTTP proxy and including with the call details of the request.

5. The method of any preceding claim comprising the further steps of:
discovering one or more alternative web service implementations to handle the request; and
selecting the second web service implementation from the one or more alternative web services discovered;

6. The method of claim 5 wherein the discovering step comprises the steps of:
obtaining a first web service implementation Web Services Definition Language document for the first web service implementation; and
using information from the web service implementation Web Services Definition Language document to obtain a Web Services Definition Language document for each of the one or more alternative web service implementations to handle the request;

7. The method of any preceding claim comprising the further step of:
applying a security policy to the request;
wherein the step of applying the security policy comprises one or more of the steps:
encrypting at least part of the request;
adding a web client key to the request; and
sending the request using a secure application layer protocol;

8. The method of any preceding claim comprising the further step of:
adding information specific to the web client to the request comprising one or more of the steps:
adding an IP address of the client data processing host;
adding a machine identifier of client data processing host;
adding a web client key;

9. The method of any preceding claim wherein the policy data specifies one or more of: a response time requirement; a security level requirement; a transaction requirement; a cost requirement; an availability requirement; an application layer protocol requirement; an additional information requirement; and a web service implementation requirement.

10. A client data processing apparatus for transforming a request from a web client, the apparatus comprising:
means for intercepting the request;
means for changing a first web service implementation specified in the request to a second web service implementation; and
means for forwarding the request to the second web service implementation thereby enabling the second web service implementation to process the request,
wherein the means for changing a first web service implementation is operable to select the second web service implementation based on policy data associated with the web client.

11. The apparatus of claim 10 wherein the request is specified in a first application layer protocol and the apparatus further comprises:
means for modifying the request to be specified in a second application layer protocol.

12. The apparatus of either claim 10 or claim 11 further comprising a SOCKS proxy and the means for intercepting the request is operable to call the SOCKS proxy and include with the call details of the request.

13. The apparatus of either claim 10 or 11 wherein apparatus further comprises a HTTP proxy and the means for intercepting the request is operable too call the HTTP proxy and include with the call details of the request.

14. The apparatus of any one of claims 10 to 13 further comprising:
means for discovering one or more alternative web service implementations to handle the request; and
means for selecting the second web service implementation from the one or more alternative web services discovered;

15. The apparatus of claim 14 wherein the means for discovering comprises:
means for obtaining a first web service implementation Web Services Definition Language document for the first web service implementation; and
means for using information from the web service implementation Web Services Definition Language document to obtain a Web Services Definition Language document for each of the one or more alternative web service implementations to handle the request;

16. The apparatus of any one of claims 10 to 15 further comprising:
means for applying a security policy to the request comprising on more of:
means for encrypting at least part of the request;
means for adding a client key to the request; and
means for sending the request using a secure transport mechanism.

17. The apparatus of any one of claims 10 to 16 further comprising:
means for adding information specific to the web client to the request comprising one or more of:
means for adding an IP address of the client data processing host;
means for adding a machine identifier of client data processing host;
means for adding a web client key;

18. The apparatus of any one of claims 10 to 17 wherein the policy data specifies one or more of: a response time requirement; a security level requirement; a transaction requirement; a cost requirement; an availability requirement; an application layer protocol requirement; an additional information requirement; and a web service implementation requirement.

19. A computer program product comprising instructions which, when executed on a data processing host, cause the data processing host to carry out the method as claimed in any one of claims 1 to 9.

## Patentansprüche

1. Verfahren zum Verarbeiten von Clientdaten, um eine Anforderung von einem Web-Client umzuwandeln, wobei das Verfahren die folgenden Schritte umfasst:
Abfangen (501) der Anforderung;
Ändern (505, 506) einer Ausführungsform eines ersten Internetdienstes, die in der Anforderung angegeben ist, in eine Ausführungsform eines zweiten Internetdienstes; und
Weiterleiten (504) der Anforderung an die Ausführungsform eines zweiten Internetdienstes, um **dadurch** die Ausführungsform eines zweiten Internetdienstes in die Lage zu versetzen, die Anforderung zu verarbeiten,
wobei die Ausführungsform des zweiten Internetdienstes ausgehend von mit dem Webclient verbundenen Strategiedaten ausgewählt wird (506).

2. Verfahren nach Anspruch 1, bei dem die Anforderung im Protokoll einer ersten Anwendungsschicht angegeben wird und das Verfahren ferner den folgenden Schritt umfasst:
Ändern der im Protokoll einer zweiten Anwendungsschicht anzugebenden Anforderung.

3. Verfahren nach Anspruch 1 oder nach Anspruch 2, bei dem der die Clientdaten verarbeitende Host einen SOCKS-Proxy umfasst und der Schritt des Abfangens der Anforderung das Aufrufen des SOCKS-Proxy mit den in der Anforderung enthaltenen Anrufdetails umfasst.

4. Verfahren nach Anspruch 1 oder nach Anspruch 2, bei dem der die Clientdaten verarbeitende Host einen HTTP-Proxy umfasst und der Schritt des Abfangens der Anforderung das Aufrufen des HTTP-Proxy mit den in der Anforderung enthaltenen Anrufdetails umfasst.

5. Verfahren nach einem der vorhergehenden Ansprüche, das ferner die folgenden Schritte umfasst:
Ermitteln der Ausführungsformen eines oder mehrerer Internetdienste zur Verarbeitung der Anforderung; und
Auswählen der Ausführungsform des zweiten Internetdienstes aus den ermittelten einen oder mehreren alternativen Internetdiensten.

6. Verfahren nach Anspruch 5, bei dem der Ermittlungsschritt die folgenden Schritte umfasst:
Erhalten eines Dokuments mit der Definitionssprache für Internetdienste Web Services Definition Language für die Ausführungsform des ersten Internetdienstes; und
Verwenden der Informationen aus dem Web Services Definition Language-Dokument für die Ausführungsform des Internetdienstes, um ein Web Services Definition Language-Dokument für jede der Ausführungsformen des einen oder der mehreren alternativen Internetdienste zur Verarbeitung der Anforderung zu erhalten.

7. Verfahren nach einem der vorhergehenden Ansprüche, das ferner den folgenden Schritt umfasst:
Anwenden einer Sicherheitsstrategie auf die Anforderung;
wobei der Schritt des Anwendens der Sicherheitsstrategie einen oder mehrere der folgenden Schritte umfasst:
Verschlüsseln mindestens eines Teils der Anforderung;
Zufügen eines Webclientschlüssels zur Anforderung; und
Senden der Anforderung unter Verwendung eines sicheren Protokolls der Anwendungsschicht.

8. Verfahren nach einem der vorhergehenden Ansprüche, das ferner den folgenden Schritt umfasst:
Zufügen auf den Webclient zugeschnittener Informationen zur Anforderung, wobei das Zufügen einen oder mehrere der folgenden Schritte umfasst:
Zufügen einer IP-Adresse des die Clientdaten verarbeitenden Host;
Zufügen einer Maschinen-ID des die Clientdaten verarbeitenden Host;
zufügen eines Webclientschlüssels.

9. Verfahren nach einem der vorhergehenden Ansprüche, bei dem die Strategiedaten eine oder mehrere der folgenden Bedingungen angeben: eine Antwortzeitbedingung; eine Sicherheitsniveaubedingung; eine Transaktionsbedingung; eine Kostenbedingung; eine Verfügbarkeitsbedingung; eine Anwendungsschichtprotokollbedingung; eine Zusatzinformationsbedingung; und eine Internetdienstausführungsformbedingung.

10. Vorrichtung zur Verarbeitung von Clientdaten, um eine Anforderung von einem Webclient umzuwandeln, wobei die Vorrichtung Folgendes umfasst:
ein Mittel zum Abfangen (501) der Anforderung;
ein Mittel zum Ändern (505, 506) einer Ausführungsform eines ersten Internetdienstes, die in der Anforderung angegeben ist, in eine Ausführungsform eines zweiten Internetdienstes; und
ein Mittel zum Weiterleiten (504) der Anforderung an die Ausführungsform eines zweiten Internetdienstes, um **dadurch** die Ausführungsform eines zweiten Internetdienstes in die Lage zu versetzen, die Anforderung zu verarbeiten,
wobei das Mittel zum Ändern einer Ausführungsform des ersten Internetdienstes dazu verwendet werden kann, ausgehend von mit dem Webclient verbundenen Strategiedaten die Ausführungsform des zweiten Internetdienstes auszuwählen (506).

11. Vorrichtung nach Anspruch 10, bei der die Anforderung in einem ersten Protokoll der Anwendungsschicht angegeben ist und wobei die Vorrichtung ferner Folgendes umfasst:
ein Mittel zum Ändern der in einem zweiten Protokoll der Anwendungsschicht angegebenen Anforderung.

12. Vorrichtung nach Anspruch 10 oder nach Anspruch 11, die ferner einen SOCKS-Proxy umfasst und bei der das Mittel zum Abfangen der Anforderung dazu verwendet werden kann, den SOCKS-Proxy mit den in der Anforderung enthaltenen Anrufdetails aufzurufen.

13. Vorrichtung nach Anspruch 10 oder nach Anspruch 11, die ferner einen HTTP-Proxy umfasst und bei der der Schritt des Abfangens der Anforderung dazu verwendet werden kann, den HTTP-Proxy mit den in der Anforderung enthaltenen Anrufdetails aufzurufen.

14. Vorrichtung nach einem der Ansprüche 10 bis 13, die ferner Folgendes umfasst:
ein Mittel zum Ermitteln einer oder mehrerer Ausführungsformen von alternativen Internetdiensten zum Verarbeiten der Anforderung; und
ein Mittel zum Auswählen der Ausführungsform des zweiten Internetdienstes aus den ermittelten ersten oder mehreren alternativen Internetdiensten.

15. Vorrichtung nach Anspruch 14, bei dem das Mittel zum Ermitteln Folgendes umfasst:
ein Mittel zum Erhalten eines Dokuments mit der Definitionssprache für Internetdienste Web Services Definition Language für die Ausführungsform des ersten Internetdienstes; und
ein Mittel zum Verwenden der Informationen aus dem Web Services Definition Language-Dokument für die Ausführungsform des Internetdienstes, um ein Web Services Definition Language-Dokument für jede der Ausführungsformen des einen oder der mehreren alternativen Internetdienste zur Verarbeitung der Anforderung zu erhalten.

16. Vorrichtung nach einem der Ansprüche 10 bis 15, die ferner Folgendes umfasst:
ein Mittel zum Anwenden einer Sicherheitsstrategie auf die Anforderung, wobei das Mittel eines oder mehrere der folgenden Mittel umfasst:
ein Mittel zum Verschlüsseln mindestens eines Teils der Anforderung;
ein Mittel zum Zufügen eines Webclientschlüssels zur Anforderung; und
ein Mittel zum Senden der Anforderung unter Verwendung eines sicheren Transportmechanismus.

17. Vorrichtung nach einem der Ansprüche 10 bis 16, die ferner Folgendes umfasst:
ein Mittel zum Zufügen auf den Webclient zugeschnittener Informationen zur Anforderung, wobei das Mittel eines oder mehrere der folgenden Mittel umfasst:
ein Mittel zum Zufügen einer IP-Adresse des die Clientdaten verarbeitenden Host;
ein Mittel zum Zufügen einer Maschinen-ID des die Clientdaten verarbeitenden Host;
ein Mittel zum Zufügen eines Webclientschlüssels.

18. Vorrichtung nach einem der Ansprüche 10 bis 17, bei der die Strategiedaten eine oder mehrere der folgenden Bedingungen angeben: eine Antwortzeitbedingung; eine Sicherheitsniveaubedingung; eine Transaktionsbedingung; eine Kostenbedingung; eine Verfügbarkeitsbedingung; eine Anwendungsschichtprotokollbedingung; eine Zusatzinformationsbedingung; und eine Internetdienstausführungsformbedingung.

19. Computerprogrammprodukt, das Anweisungen umfasst, die bei Ausführung in einem Datenverarbeitungshost den Datenverarbeitungshost veranlassen, das Verfahren nach einem der Ansprüche 1 bis 9 auszuführen.

## Revendications

1. Un procédé de traitement de données client pour transformer une requête venant d'un client web, le procédé comprenant les étapes consistant à :
intercepter la requête (501) ;
modifier une première mise en oeuvre de service web, spécifiée dans la requête, en une deuxième mise en oeuvre de service web (505, 506) ; et
transmettre la requête à la deuxième mise en oeuvre de service web (504), permettant de cette manière à la deuxième mise en oeuvre de service web de traiter la requête,
dans lequel la deuxième mise en oeuvre de service web est sélectionnée d'après les données de politique associées au client web (506).

2. Le procédé selon la revendication 1, dans lequel la requête est spécifiée en un premier protocole de couche d'application, et le procédé comprend l'étape supplémentaire consistant à :
modifier la requête, devant être spécifiée, en un deuxième protocole de couche d'application.

3. Le procédé selon la revendication 1 ou la revendication 2, dans lequel l'hôte de traitement des données client comprend un mandataire SOCKS et l'étape d'interception de la requête comprend l'appel du mandataire SOCKS et l'inclusion avec les détails de l'appel de la requête.

4. Le procédé selon la revendication 1 ou la revendication 2, dans lequel l'hôte de traitement des données client comprend un mandataire HTTP et l'étape d'interception de la requête comprend l'appel du mandataire HTTP et l'inclusion avec les détails d'appel de la requête.

5. Le procédé selon l'une quelconque des revendications précédentes, comprenant les étapes supplémentaires consistant à :
découvrir une ou plusieurs variantes de mise en oeuvre de service web pour traiter la requête ; et
sélectionner la deuxième mise en oeuvre de service web, parmi les unes ou plusieurs variantes de service web découvertes.

6. Le procédé selon la revendication 5, dans lequel l'étape de découverte comprend les étapes consistant à :
obtenir, à la première mise en oeuvre de service web, le document Web Services Definition Language, pour la première mise en oeuvre de service web; et
utiliser l'information provenant du document de mise en oeuvre de service web Web Services Definition Language, pour obtenir un document Web Services Definition Language pour chacune des une ou plusieurs alternatives de mise en oeuvre de service web pour traiter la requête.

7. Le procédé selon l'une quelconque des revendications précédentes, comprenant l'étape supplémentaire consistant à :
appliquer une politique de sécurité à la requête ;
dans lequel l'étape d'application de la politique de sécurité comprend une ou plusieurs des étapes suivantes :
chiffrement d'au moins une partie de la requête ;
addition d'une clé client web à la requête ; et
envoi de la requête en utilisant un protocole de couche d'application sécurisée.

8. Le procédé selon l'une quelconque des revendications précédentes, comprenant l'étape supplémentaire consistant à :
ajouter à la requête de l'information spécifique au client web, comprenant une ou plusieurs des étapes suivantes :
ajouter une adresse IP de l'hôte de traitement de données client ;
ajouter un identificateur de machine de l'hôte de traitement de données client ;
ajouter une clé de client web.

9. Procédé selon l'une quelconque des revendications précédentes, dans lequel les données de politique spécifient un ou plusieurs éléments parmi : une exigence de temps de réponse ; une exigence de niveau de sécurité ; une exigence de transaction ; une exigence de coût ; une exigence de disponibilité ; une exigence de protocole de couche d'application ; une exigence d'information additionnelle ; et une exigence de mise en oeuvre de service web.

10. Un dispositif de traitement de données client pour transformer une requête venant d'un client web, le dispositif comprenant :
des moyens pour intercepter la requête (501) ;
des moyens pour modifier une première mise en oeuvre de service web, spécifiée dans la requête, en une deuxième mise en oeuvre de service web (505, 506) ; et
des moyens pour transmettre la requête à la deuxième mise en oeuvre de service web (504), de manière à permettre à la deuxième mise en oeuvre de service web de traiter la requête ;
dans lequel les moyens de modifications d'une première mise en oeuvre de service web sont exploitables pour sélectionner la deuxième mise en oeuvre de service web, d'après des données de politique associées au client web (506).

11. Le dispositif selon la revendication 10, dans lequel la requête est spécifiée dans un premier protocole de couche d'application, et le dispositif comprend en outre :
des moyens pour modifier la requête, devant être spécifiée dans un deuxième protocole de couche d'application.

12. Le dispositif selon la revendication 10 ou la revendication 11, comprenant en outre un mandataire SOCKS et les moyens d'interception de la requête sont exploitables pour appeler le mandataire SOCKS et inclure avec les détails d'appel de la requête.

13. Le dispositif selon l'une des revendications 10 ou 11 dans lequel le dispositif comprend en outre un mandataire HTTP et les moyens d'interception de la requête sont exploitables pour appeler le mandataire HTTP et inclure avec les détails d'appel de la requête.

14. Le dispositif selon l'une quelconque des revendications 10 à 13, comprenant en outre :
des moyens, pour découvrir une ou plusieurs alternatives de mise en oeuvre de service web pour traiter la requête ; et
des moyens, pour sélectionner la deuxième mise en oeuvre de service web, à partir d'une ou plusieurs alternatives de service web découvertes.

15. Le dispositif selon la revendication 14, dans lequel les moyens de découverte comprennent :
des moyens pour obtenir un document de première mise en oeuvre de service web, Web Services Definition Language, pour la première mise en oeuvre de service web ; et
des moyens pour utiliser l'information venant de la mise en oeuvre de service web, le document Web Services Definition Language, pour obtenir un document Web Services Definition Language pour chacune des unes ou plusieurs alternatives de mise en oeuvre de service web pour traiter la requête.

16. Le dispositif selon l'une quelconque des revendications 10 à 15, comprenant en outre :
des moyens, pour appliquer une politique de sécurité à la requête, comprenant un ou plusieurs parmi :
des moyens, pour chiffrer au moins une partie de la requête ;
des moyens, pour ajouter une clé de client à la requête ; et
des moyens, pour envoyer la requête en utilisant un mécanisme de transfert sécurisé.

17. Le dispositif selon l'une quelconque des revendications 10 à 16, comprenant en outre :
des moyens pour ajouter de l'information spécifique au client web à la requête, comprenant un ou plusieurs parmi :
des moyens, pour ajouter une adresse IP à l'hôte de traitement de données client ;
des moyens, pour ajouter un identificateur de machine de l'hôte de traitement de données client ;
des moyens, pour ajouter une clé de client web.

18. Le dispositif selon l'une quelconque des revendications 10 à 17, dans lequel les données de politique spécifient un ou plusieurs parmi : une exigence de temps de réponse ; une exigence de niveau de sécurité ; une exigence de transaction ; une exigence de coût ; une exigence de disponibilité ; une exigence de protocole de couche d'application ; une exigence d'information additionnelle ; et une exigence de mise en oeuvre de service web.

19. Un produit de programme pour ordinateur, comprenant des instructions qui, une fois exécutées sur un hôte de traitement de données, provoquent l'exécution par l'hôte de traitement de données du procédé tel que revendiqué à l'une quelconque des revendications 1 à 9.
